# EUROPEAN PATENT APPLICATION

(11) **EP 3 696 131 A1**
(43) Date of publication of application: **19.08.2020**
(21) Application number: 19192302.8
(22) Date of filing: 19.08.2019
(51) Int. Cl.: B66B 15/04

(54) **ELEVATOR SHEAVE TRACTION SURFACE**

(30) Priority: 17.08.2018 US 201816104287
(71) Applicant: Otis Elevator Company, Farmington, Connecticut 06032 (US)
(72) Inventor: CHANG, Xiaoyuan, Farmington, CT Connecticut 06032 (US)
(74) Representative: Dehns

(57) **Abstract**

A traction sheave (131) for an elevator includes a composite coating (141) applied directly to a surface (143) of the traction sheave (131) to at least partially define a traction surface (133) arranged to engage a tension member. The composite coating (141) including a coating (151) having surface roughening particles (153) arranged to provide a predetermined surface roughness of the traction surface (133) within a range of 1 - 5 µm.

## Description

### BACKGROUND

The embodiments herein relate to elevator sheaves.

Elevator sheaves may be arranged to accommodate ropes to drive the elevator. The surface traction of the elevator sheave is controlled by surface material and roughness of the sheave.

### BRIEF SUMMARY

According to an embodiment, a traction sheave for an elevator is provided. The traction sheave includes a composite coating applied to directly to a surface of the traction sheave to at least partially define a traction surface arranged to engage a tension member. The composite coating including a coating having surface roughening particles arranged to provide a predetermined surface roughness of the traction surface within a range of 1 - 5 µm.

In addition to one or more of the features described herein, the coating is applied through a plating process to the surface.

In addition to one or more of the features described herein, or as an alternative, the surface roughening particles are at least one of Si-C particles and B-C particles having a thickness within a range of 5-25 microns.

In addition to one or more of the features described herein, or as an alternative, a size of at least one of the Si-C particles and B-C particles is at least 0.5 nanometers.

In addition to one or more of the features described herein, or as an alternative, a size of at least one of the Si-C particles and B-C particles is at least 0.5 micrometers.

According to an embodiment, a traction sheave for an elevator is provided. The traction sheave includes a surface and a nickel based coating containing at least one of Si-C particles and B-C particles plated to the surface to define a traction surface.

In addition to one or more of the features described herein, the nickel based coating containing at least one of the Si-C particles and B-C particles has a thickness within a range of 5-25 microns.

In addition to one or more of the features described herein, or as an alternative, a concentration of at least one of the Si-C particles and B-C particles is up to 20%.

In addition to one or more of the features described herein, or as an alternative, at least one of the Si-C particles and B-C particles have a first shape and a second shape.

In addition to one or more of the features described herein, or as an alternative, the first shape is hexagonal.

In addition to one or more of the features described herein, or as an alternative, the second shape is cubic.

According to an embodiment, a method of providing a wear resistant friction coating to a traction sheave is provided. The method includes cleaning a surface of a traction sheave and plating the surface with a nickel based coating containing at least one of the Si-C particles, B-C particles, and/or similar types of particles to define a traction surface.

In addition to one or more of the features described herein, a concentration of at least one of the Si-C particles and B-C particles is within a range up to 20%.

In addition to one or more of the features described herein, the nickel based coating containing at least one of the Si-C particles and B-C particles has a thickness within a range of 5-25 microns.

In addition to one or more of the features described herein, or as an alternative, a surface roughness of the traction surface is within a range of 1- 5 µm.

Technical effects of embodiments of the present disclosure include traction sheave includes a surface and a nickel based coating containing Si-C particles plated to the surface to define a traction surface.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 is a schematic illustration of a machine incorporating a traction sheave of the present disclosure; and
FIG. 3 is a partial schematic view of a portion of a traction surface of the traction sheave.

### DETAILED DESCRIPTION

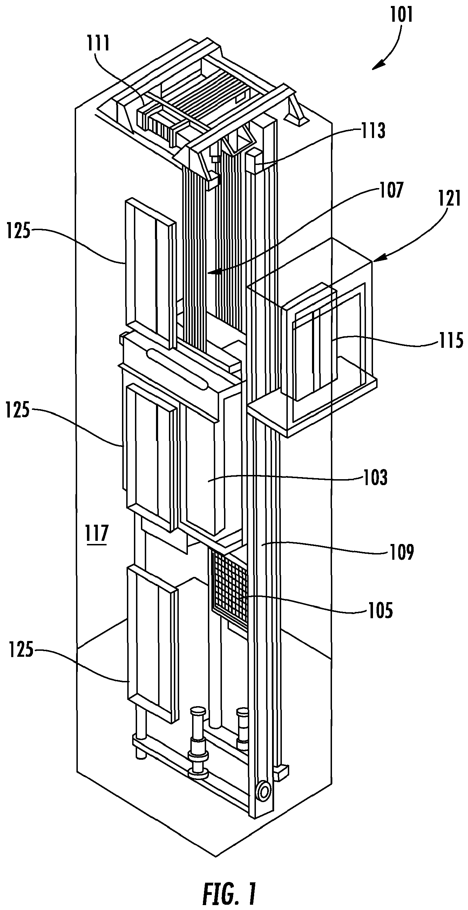

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

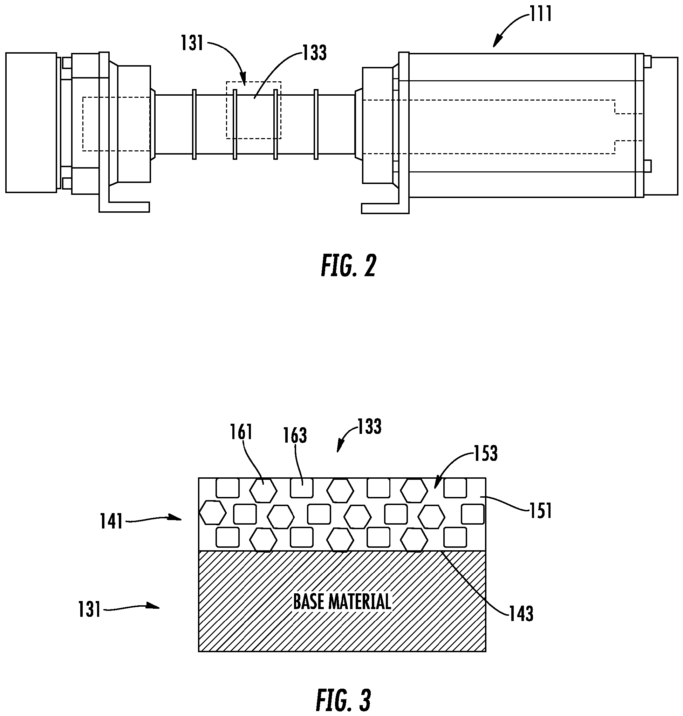

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave 131 that imparts force to tension member 107 to move the elevator car 103 within elevator shaft 117, as shown in FIGS. 1 and 2.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in Figure 1.

Referring to FIGS. 2 and 3, the traction sheave 131 includes a traction surface 133 that is arranged to engage the tension member 107 to provide traction and support. The traction surface 133 may be a contact surface having a predetermined surface roughness.

Commonly, a surface of the traction sheave 131 is processed and finished to meet the predetermined surface roughness. The surface may be processed mechanically using a peening process or a blasting process to create a desired surface roughness prior to the application of a durable coating to the surface of the traction sheave 131. The blasting process may impact the final quality of the coating such as corrosion durability due to the presence of the grit particles remaining on the surface. Grit particles from the blasting process are difficult to remove from or clean off of the surface prior to application of the durable coating. The residual grit particles are contaminations deposited on the surface which may impact coating coverage and coating adhesion. As a result, the desired predetermined surface roughness may not be achieved and life of the surface of the traction sheave 131 may be reduced. The present disclosure provides a composite coating 141 that contains surface roughening particles such as nano/micro-particles to provide a desired or predetermined surface roughness without using a mechanical roughing process.

The composite coating 141 containing surface roughening particles that are arranged to provide the desired surface roughness that provides traction for the machine 111. The corrosion durability and coating coverage of the composite coating 141 is improved as compared to previous coatings due to the elimination of the blasting process and the inhibition of surface contamination due to grit particles used in a blasting process. Furthermore, the corrosion performance of the composite coating 141 is improved as compared to non-composite coatings.

The composite coating 141 is applied directly to a surface 143 of the traction sheave 131 through a plating process after cleaning of the surface 143 of the traction sheave 131. The composite coating 141 at least partially defines the traction surface 133 of the traction sheave 131.

The composite coating 141 includes a coating 151 having surface roughening particles dispersed throughout or through the coating 151. The coating 151 may be a nickel-based coating or similar coating, including or containing micro/nano silicon carbide (Si-C) particles 153, micro/nano boron carbide (B-C) particles, or the like that are arranged to provide the desired or predetermined surface roughness for the traction surface 133 on the traction sheave 131. The coating 151 does not include hexavalent chrome.

The micro/nano boron carbide or silicon carbide particles 153 are mixed with a solution of the nickel-based coating to facilitate plating the composite coating 141 to the surface 143 of the traction sheave 131. A concentration of the boron carbide or silicon carbide particles 153 of the composite coating 141 is up to 20%. In at least one embodiment, the concentration of the boron carbide or silicon carbide particles 153 of the composite coating 141 is within a range of 3% to 7% or 2%-20%. The composite coating 141 is applied to the surface 143 of the traction sheave 131 through a plating process.

The composite coating 141 may have a thickness within a range of 5 -25 µm. The composite coating 141 that includes the coating 151 containing silicon carbide (Si-C) particles 153, boron carbide particles, and/or similar types of particles may have a surface roughness within a range of 1-5 µm.

A size of the silicon carbide particles 153 is at least 0.5 nm or is at least 0.5 µm. The silicon carbide particles 153 may have a first shape 161 and a second shape 163. The first shape 161 may be hexagonal and may improve wear resistance of the composite coating 141. The second shape 163 may be cubic and may improve the traction of the composite coating 141. Therefore, the first shape 161 and the second shape 163 of the silicon carbide particles 153, boron carbide particles, and/or similar types of particles may be mixed throughout the composite coating 141 to provide both good wear resistance and good traction. The silicon carbide particles 153, boron carbide particles, and/or similar types of particles may be dispersed generally uniformly within or throughout the solid matrix of the coating 151.

The composite coating 141 incorporating the nickel-based coating 151 containing silicon carbide particles 153, boron carbide particles, and/or similar types of particles enables the size, type, and/or density of the silicon carbide particles 153, boron carbide particles, and/or similar types of particles to be controlled to control the desired surface roughness of the traction surface 133 of the traction sheave 131. The composite coating 141 eliminates the surface roughness finishing process such as blasting or other mechanical procedures prior to plating and therefore eliminates the potential contamination from the blasting procedures. The performance of the composite coating 141 is improved due to better adhesion and coating coverage of the surface 143 of the traction sheave 131 because the surface 143 prior to plating is smoother and without blasting contamination. As well, the composite coating 141 has improved coating cracking resistance because the composite coating 141 is a tough coating.

The composite coating 141 integrates and balances material strength and toughness properties to achieve the maximum performance of coating wear and cracking resistance. The strength of the composite coating 141 is improved by adding the silicon carbide particles 153, boron carbide particles, or similar types of nano/micro particles. Coating wear resistance, such as coating deformation is also improved due to the presence of the silicon carbide particles 153, boron carbide particles, or similar types of nano/micro particles present within the composite coating 141. The presence of the silicon carbide particles 153, boron carbide particles, or similar types of nano/micro particles also reduces the risk of the traction surface 133 polishing.

Where reference is made herein to surface roughness, it will be understood that the surface roughness may be a standard parameter such as, for example, the arithmetic mean height or average roughness, Rₐ. Some other common parameters include R_{z}, R_{q} and Rₛₖ. Surface roughness can be measured by standard tests. For example, ASME B46.1-2002, ISO 4288:1998 and ISO 4287:2000 specify how to measure surface roughness and evaluate surface roughness parameters.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A traction sheave for an elevator, comprising:
a composite coating applied directly to a surface of the traction sheave to at least partially define a traction surface arranged to engage a tension member, the composite coating including a coating having surface roughening particles arranged to provide a predetermined surface roughness of the traction surface within a range of 1 - 5 µm.

2. The traction sheave of claim 1, wherein the composite coating is applied through a plating process to the surface.

3. The traction sheave of claim 1 or 2, wherein the surface roughening particles are at least one of Si-C particles and B-C particles.

4. The traction sheave of claim 3, wherein a size of at least one of the Si-C particles and B-C particles is at least 0.5 nanometers.

5. The traction sheave of claim 3, wherein a size of at least one of the Si-C particles and B-C particles is at least 0.5 micrometers.

6. A traction sheave for an elevator, comprising:
a surface; and
a nickel based coating containing at least one of Si-C particles and B-C particles plated to the surface to define a traction surface.

7. The traction sheave of claim 6, wherein the nickel based coating containing at least one of Si-C particles and B-C particles has a thickness within a range of 5-25 microns.

8. The traction sheave of claim 6 or 7, wherein a concentration of at least one of the Si-C particles and B-C particles is up to 20%.

9. The traction sheave of any of claims 6-8, wherein at least one of the Si-C particles and B-C particles have a first shape and a second shape.

10. The traction sheave of claim 9, wherein the first shape is hexagonal.

11. The traction sheave of claim 9 or 10, wherein the second shape is cubic.

12. A method of providing a wear resistant friction coating to a traction sheave, comprising:
cleaning a surface of a traction sheave; and
plating the surface with a nickel based coating containing at least one of Si-C particles and B-C particles to define a traction surface.

13. The method of claim 12, wherein a concentration of at least one of Si-C particles and B-C particles is up to 20%.

14. The method of claim 12 or 13, wherein the nickel based coating containing at least one of Si-C particles and B-C particles has a thickness within a range of 5-25 microns.

15. The method of any of claims 12-14, wherein a surface roughness of the traction surface is within a range of 1- 5 µm.
